# EUROPEAN PATENT APPLICATION

(11) **EP 2 816 865 A1**
(43) Date of publication of application: **24.12.2014**
(21) Application number: 14164787.5
(22) Date of filing: 15.04.2014
(51) Int. Cl.: H04W 76/02, H04W 88/06

(54) **Communication control method and electronic device implementing the same**

(30) Priority: 16.04.2013 KR 20130041897
(71) Applicant: Samsung Electronics Co., Ltd, Gyeonggi-do 443-742 (KR)
(72) Inventor: Lee, Jaehyeok, 443-742 Gyeonggi-do (KR); Moon, Youngsin, 443-742 Gyeonggi-do (KR); Park, Hongju, 443-742 Gyeonggi-do (KR)
(74) Representative: Nederlandsch Octrooibureau

(57) **Abstract**

A communication control method is provided for controlling communication of an electronic device. The communication control method of the present disclosure includes establishing, at a source device, a preliminary channel via a first communication module, communicating data for establishing a communication channel through the preliminary channel, the communication channel being established via a second communication module, and establishing the communication channel via the second communication module. The communication control method and electronic device implementing the same according to the present disclosure is capable of improving communication performance.

## Description

### TECHNICAL FIELD

The present disclosure relates to an electronic device and, in particular, to a method for controlling communication of the electronic device.

### BACKGROUND

With the advance of the hardware technology, the electronic device is developed to meet various user requirements. The electronic device is provided with the communication function to establish a connection with another electronic device. In order for the electronic devices to communicate with each other, they perform connection setup procedure. In this embodiment, each electronic device may have standby state for establishing a connection. In the situation where there is no explicit schedule for connection setup, the standby state causes unnecessary power consumption of the electronic device.

### SUMMARY

To address the above-discussed deficiencies, it is a primary object to provide a communication control method and electronic device implementing the same that is capable of improving the performance of the electronic device.

In accordance with an aspect of the present disclosure, an embodiment provides a communication control method. The communication control method includes establishing, at a source device, a preliminary channel via a first communication module, communicating data for establishing a communication channel through the preliminary channel, the communication channel being established via a second communication module, and establishing the communication channel via the second communication module.

In accordance with another aspect of the present disclosure, an embodiment provides a source device. The source device includes a first communication module which broadcasts a scan signal for supporting Wi-Fi direct mode and establishes a preliminary channel for preparing for establishment of a communication channel, a second communication module which establishes the communication channel, and a first control unit which controls broadcasting the scan signal, generating a device list including at least one target device item based on response signal received in reply to the scan signal, displaying the device list, establishing the preliminary channel with a target device corresponding to an target device item selected from the device list via the first communication module, and establishing the communication channel with the target device via the second communication module.

In accordance with still another aspect of the present disclosure, an embodiment provides a target device. The target device includes a Bluetooth module which transmits a response signal in reply to a scan signal to establish a preliminary channel for preparing establishment of a communication channel, a Wi-Fi module which establishes the communication channel, and a second control unit which controls establishment of the preliminary channel via the Bluetooth module upon receipt of a Bluetooth connection request from a source device which has broadcast the scan signal and the communication channel with the source device via the Wi-Fi module.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a diagram showing a communication control system including a plurality of electronic devices according to an embodiment of the present disclosure;
FIG. 2 illustrates a diagram showing a configuration of the source device of FIG. 1
FIG. 3 illustrates a block diagram showing a configuration of the first control unit of FIG. 2;
FIG. 4 illustrates a block diagram showing a configuration of the target device 200 of FIG. 1;
FIG. 5 illustrates a process for the operation procedure of the source device in the communication control method according to an embodiment of the present disclosure;
FIG. 6 illustrates a signal flow diagram showing signal flows between devices in the communication control method according to an embodiment of the present disclosure;
FIG. 7 illustrates a signal flow diagram showing signal flows between devices in the communication control method according to another embodiment of the present disclosure;
FIG. 8 illustrates a diagram showing example screen displays of the source device for explaining the communication control method according to an embodiment of the present disclosure; and
FIG. 9 illustrates a diagram showing example screen displays of the target device for explaining the communication control method according to an embodiment of the present disclosure.

### DETAILED DESCRIPTION

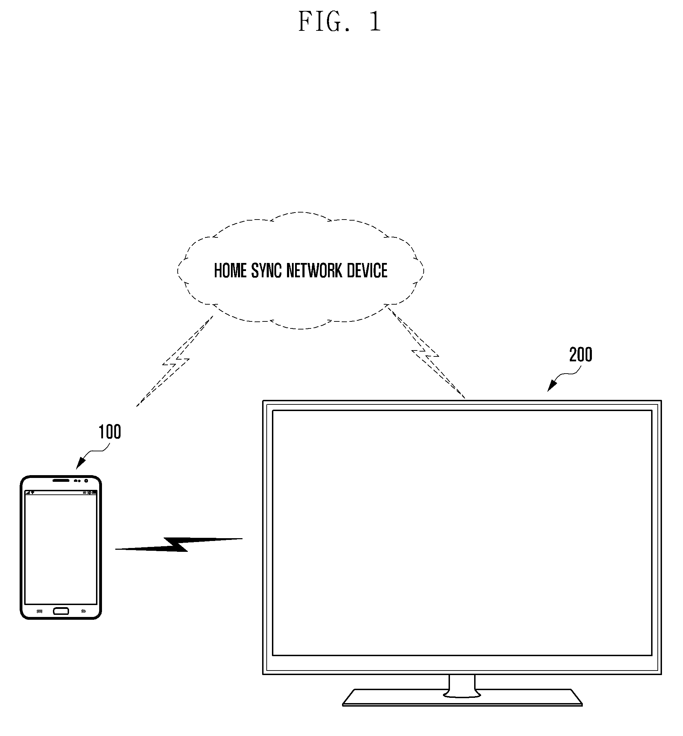

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or method. Example embodiments of the present disclosure are described with reference to the accompanying drawings in detail. Detailed description of well-known functions and structures incorporated herein may be omitted to avoid obscuring the subject matter of the present disclosure. This aims to omit unnecessary description so as to make the subject matter of the present disclosure clear.

For the same reason, some of elements are exaggerated, omitted or simplified in the drawings and the elements may have sizes and/or shapes different from those shown in drawings, in practice. The same reference numbers are used throughout the drawings to refer to the same or like parts.

FIG. 1 is a diagram illustrating a communication control system including a plurality of electronic devices according to an embodiment of the present disclosure.

Referring to FIG. 1, the communication control system of the present disclosure includes the electronic devices establishing a communication channel therebetween, i.e. the source device 100 and the target device 200. Although one target device 200 is depicted in FIG. 1, the present disclosure is not restricted thereto. That is, more than one target device 100 may be connected and discovered by the source device 100 in the discovery procedure.

The above-described communication control system is capable of allowing the application data of at least one application running on the source device 100 to be output through the target device 200. For this purpose, the source and target devices 200 establish a communication channel. For example, the source and target devices 100 and 200 may establish a Bluetooth communication channel first and then a Wi-Fi communication channel. The Bluetooth communication module operates at a low power level as compared to the Wi-Fi communication module. However, the Wi-Fi module may support higher data rate as compared to the Bluetooth communication module. The communication control system of the present disclosure may be configured to search for the target device 200 to be connected to the source device 100 using the Bluetooth communication module and then establish a communication channel with the target device 200 by means of the Wi-Fi module. In this way, the communication control system of the present disclosure uses the low power communication module in the pre-connection establishment state and the high data rate communication module for establishing the communication channel capable of supporting high volume high speed data communication.

Although the description is directed to the example embodiment where the Bluetooth module is used in the pre-communication channel establishment state and the Wi-Fi module is used for establishing the communication channel, the present disclosure is not limited thereto. For example, a communication module which operates at a low power level as compared to other communication modules included in the electronic device may be used in the pre-communication channel establishment state. Also, a communication module which supports high volume and high speed data communication as compared to other communication modules included in the electronic device may be used for establishing the channel for data communication.

That is, the source and target devices 100 and 200 of the communication control system include a plurality of communication modules compatible therebetween, and the communication modules include a first communication module for use in preparing communication channel establishment and a second communication module for use in establishing the communication channel. Here, the first communication module is of operating at a low power level as compared to other communication modules. For example, the first communication module may be one of Bluetooth module, ZigBee module, Ultra-wideband (UWB) module, and infrared communication module. The second communication module is of being capable of high volume high data rate transmission as compared to other communication modules. The second communication module may be one of Wi-Fi module, 3^{rd} Generation (3G) communication module, and 4G communication module.

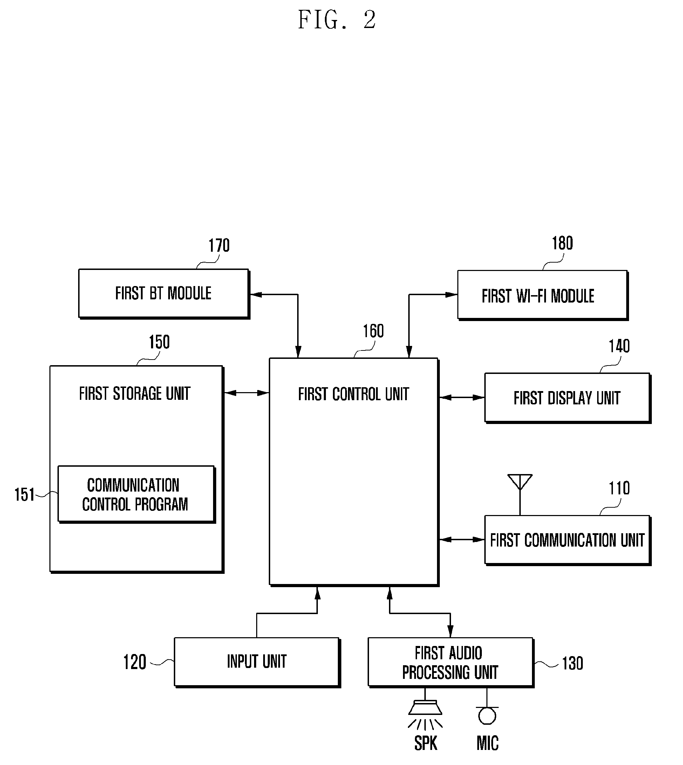

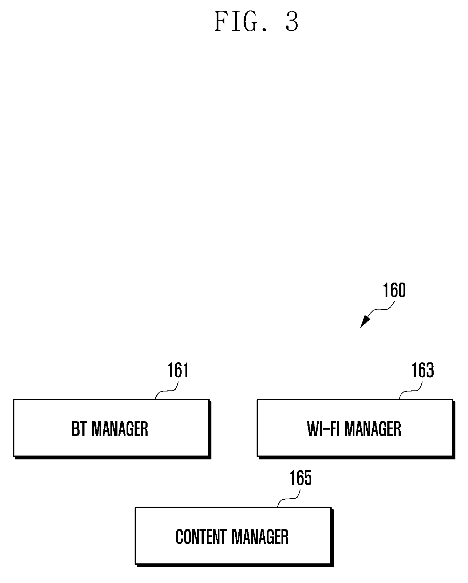

The source device 100 may search for at least one target device 200 under the control of the user. The source device 100 may establish a communication channel with at least one target device 200 selected by the user among the found devices. The source device 100 may search for at least one target device 200 using the first communication module. The source device 100 may output the information on the at least one target device 200 found by means of the first communication module 100. The source device 100 may establish a communication channel with the selected target device by means of the second communication module. The source device 100 may establish a communication channel with the target device 200 using the second communication module. The source device 100 may transmit the data received from outside or stored in the storage unit or the currently activated data to the target device 200 under the control of the user. In this embodiment, the source device may transmit the corresponding data to the target device 200 in the high volume and high speed communication environment supported by the second communication module. The data transmitted from the source device 100 to the target device 200 may include received broadcast data, video data, and currently presented data, the data stored in the storage unit. The source device 100 may search for the target device without extra qualification information verification by means of the first communication module. The source device 100 may perform the qualification process in the communication channel establishment procedure with the target device by means of the second communication module. A description is made of the configuration of the source device in more detail with reference to FIGs. 2 and 3.

The target device is the device of outputting the data provided by the source device 100. The target device 200 may support a reply standby state for responding to the communication scan by maintaining the turn-on state of the first communication module operating in a low power mode. The target device 200 may receive a discovery signal using the first communication module in the standby state. If the discovery signal is received, the target device 200 may transmit the unique information on the first communication module, e.g. MAC address of the first communication module, to the source device 100. The target device 200 also may transmit its unique information, e.g. predefined device name, to the source device 100. The target device 200 may receive a request for establishing a communication channel transmitted by the source device through the second communication module. Then the target device 200 may activate the second communication module to establish the communication channel. Afterward, the target device 200 may output the data provided by the source devices through the second communication module. The target device 200 may deactivate the first communication module in the state that the second communication module operates. The target device 200 also may control the first communication unit is in the standby state while the second communication module is operating.

FIG. 2 is a diagram illustrating a configuration of the source device 100 of FIG. 1. The description is directed to an example embodiment where the first communication module is a Bluetooth (BT) module and the second communication module is a Wi-Fi module.

As shown in FIG. 2, the source device 100 of the present disclosure includes a first communication unit 110, an input unit 120, a first audio processor 130 130, a first display unit 140, a first storage unit 150, a first control unit 160, a first BT module 170, and a first Wi-Fi module 180.

The first communication unit 110 may support long distance communication of the source device 100. For example, the first communication unit 110 may be a mobile communication module. The first communication unit 110 may be the communication module making it possible to access the Internet through a wired or wireless link. The first communication unit 110 is capable of establishing a communication channel with a network server, e.g. a home sync network device. The first communication unit 110 may support data communication for registering the source device 100 with the home sync network device.

The home sync network device may be the device supporting data synchronization among a plurality of devices deployed within an area, e.g. home. In order to achieve this, the home sync network device may include at least one communication module capable of establishing communication channels with the plural devices deployed in the home. The home sync network device may manage the information on specific devices based on the qualification information, e.g. account information, under the control of the user. The user may register the devices for sharing the data through the home sync network device the account of the home sync network device and manage the devices through the home sync network device. The home sync network device may support registered device qualification and account information sharing. In the present disclosure, the home sync network device may store and manage the unique identity information of the source device and the at least one target device 200 according to the user request. The home sync network device may provide the source and target devices 100 and 200 with the qualification information announcing of the registration with one sharing group to allow for sharing information without extra qualification process.

The home sync network device may support establishment of a communication channel between the source and target devices 100 and 200. In an embodiment, the home synch network device may support establishment of the communication channel with the first communication unit 110 of the source device 100 and registration of the unique identity information of the source device 100. The home sync network device also may provide the target device 200 with the unique identity information of the source device 100 and provide the source device 100 with the unique identity information of the target device 200. The unique identity information may include at least one of the MAC address information of the communication module of the device, unique hardware information assigned to the device, and the device name designated by the user.

Although the description has been directed to the embodiment where the home sync network device makes it possible for the source and destination devices 100 and 200 to share their qualification informations to support device qualification between the source and destination device 200 based thereon, the present disclosure is not limited thereto. For example, at least one of the source and destination devices 100 and 200 may include qualification key algorithm. Also, at least one of the source and destination devices 100 and 200 may acquire the address of the peer device through a Bluetooth connection and generate the qualification key based on the address, the qualification key being shared. For example, the target device 200 may collects the unique identity information of the source device 100, generate an qualification key based on this information, and provided the source device 100 with the qualification key to perform the qualification process for the source device 100. Also, the source device 100 may collect the unique identity information, e.g. address information, of the target device 200 through the Bluetooth connection, generate a qualification key based on this information, and share the qualification key with the target device 200. In the present disclosure, each of the source and target devices 100 and 200 may generate the qualification key based on the address information of the other device and perform mutual qualification using the qualification keys.

In an embodiment of the present disclosure, the source and destination devices 100 and 200 may store a qualification key algorithm capable of ciphering/deciphering information for device recognition. For example, the source device 100 may collect the unique identity information of the target device 200 and then generate a qualification key based on the unique identity information using the qualification key algorithm. Here, the unique identity information may include at least one of Bluetooth address, Bluetooth MAC address, Bluetooth name, and hardware serial number of the target device 100. The unique identity information may include numeral information and/or barcode printed on the embodiment of the target device 200. That is, the unique identity information may include any of all the types of informations capable of identifying the target device 200. In the embodiment of the printed information, the user of the source device may enter the numeral information directly or use a certain device to collect the printed information. The source device 100 may include a scanner for barcode recognition or other image recognition device for recognizing 2-dimensional barcode, Quick Response (QR) code, and 3-dimensinal bar code.

If the qualification key is generated, the source device 100 sends the qualification key to the target device 200, and the target device 200 decodes the qualification key using the qualification key algorithm. If the decode key matches its own identity information, the target device 200 completes the qualification of the source device 100 and performs a procedure for establishing a Wi-Fi direct connection. Here, the source device 100 may transmit a Wi-Fi MAC address to the target device 200 along with the qualification key. Then the target device 200 verifies the qualification key and prepares signal communication for Wi-Fi direct connection using the received MAC address. In the embodiment that the qualification key generation procedure is performed as above, the source and target device 200 may check the qualification key and establish a Wi-Fi direction connection based on the qualification key without qualification key sharing process.

The first communication unit 110 is responsible for establishing a communication channel to support at least one of message service function, webpage navigation function, video communication function, voice communication function, data communication function, cloud function, and other aforementioned communication-related applications. In the embodiment that the source device 100 supports the broadcast reception function, the first communication unit 110 may include a broadcast reception module. If the first communication unit 100 establishes a communication channel to received data, the received data is transferred to the first control unit 160. The first control unit 160 provides the data to the corresponding application for the operation of the application. In this embodiment, the application data for the operation of the application may be provided to the target device 200.

The input unit 120 is a component for generating the signal input to the source device 100. The input unit 120 may be implemented with a plurality of keys in the form of button type keys, side keys, and home key. The input unit 120 may generate an input key for control of standby screen and menu screen in response to user's manipulation. The input unit 120 may generate input signals for scanning based on the first BT module 170, designating one of the found devices as the target device, and requesting for transmission of specific data to the target device over a communication channel established by means of the first Wi-Fi module 180 under the control of the user.

In the embodiment that the first display unit 140 is implemented in the form of a touchscreen capable of detecting touch gestures, the input unit 120 may be included as a part of the first display unit 140. The input signal generated by the first display unit 140 is transferred to the first control unit 160, and the first control unit 160 controls to search for the target device and establish a Wi-Fi direct mode connection based on touch signal.

The first audio processing unit 130 is a component for processing various audio signals generated by the source device 100. For example, the first audio processing unit 130 may include a speaker for supporting output of the audio signal generated or decoded by the source device 100 and a microphone capable of collecting audio signal for supporting voice and video communication function and recording function.

The first audio processing unit 130 may support output of announcement sound or sound effect guiding the process of searching for the target device 200 by means of the first BT module 170 and notifying of the establishment of communication channel with the selected target device by means of the first Wi-Fi module 180. The announcement sound output function may be omitted according to the designer's intension or user's selection. While the first audio processing unit 130 is providing at least one of video and audio data to the target device 200, it may output the audio data independently of the target device 200. The first audio processing unit 130 also may stop outputting audio data while the target device 200 outputs the corresponding audio data.

The first display unit 140 is a component for outputting various execution screens related to the operations of the source device. For example, the first display unit 140 may display a menu screen, a multi-applications execution screen, and a full screen view execution screen of an application. The display unit 140 also may display a device list screen including at least one found target device 200 and a communication channel establishment screen showing the progress of establishing the communication channel with the target device selected from the device list by means of the first Wi-Fi module 180. The first display unit 140 may display the execution screen of the application executed in response to the user request or according to a predetermined schedule and a screen showing the progress of transmitting application data to the target device 200.

The first display unit 140 may display an input window for receiving qualification information in the procedure of establishing a communication channel with the target device 200. For example, the display unit 140 may display an input window for receiving a PIN code in the procedure of establishing the communication channel by means of the first Wi-Fi module 180. The first display unit 140 may be in the turn-off state while the application data is provided to the target device 200. The first display unit 140 displays the application data identical with that provided to the target device 200 with the exception that the application data is processed to be fit for the source device 100. The display unit 140 may display an application execution screen, an idle mode screen, a menu screen, or an icon screen independently of the application execution screen displayed by the target device 200. For this purpose, the source device 100 may support multi-tasking.

The first display unit 140 may include a touch panel and a display panel for supporting input function. The first display unit 140 may also include a pen touch panel for detecting input gestured of an electronic pen. The touch panel may be a capacitive type or resistive type panel capable of detecting any physical or electrical change caused by the touch made with a finger. The touch panel is arranged on the front or rear surface of the display panel to generate a signal corresponding to the touch gesture made with the finger to the first control unit 160. The display panel is a component to display the objects constituting the screen. The display panel is mapped to the touch panel and displays various elements constituting the screen. For example, the display panel may display the execution screen of one of a plurality of currently running applications. The pen touch panel may be arranged on the front or rear surface of the display panel to recognize the approach of the electronic pen and generates input signal corresponding to the gesture made with the electronic pen to the first control unit 160. The pen touch panel may be provided in various forms according to the feature of the electronic pen. For example, the pen touch panel may be implemented as an electromagnetic induction type panel. The above-described touch panel and pen touch panel may be used as a part of the input unit 120 of the source device. In the embodiment that the source device 100 is designed without at least one of the finger touch and pen touch detection functions, the first display unit 140 may be implemented without one of the touch panel and pen touch panel.

The first storage unit 150 may store various application data generated by the applications running on the source device 100. For example, the first storage unit 150 may store the programs necessary for operating the source device such as Operating System (OS). The first storage unit 150 also may store the applications related to the device functions and loads applications selectively in response to a user request. The first storage unit 150 may store a communication control program 151 for supporting the communication control function according to an embodiment of the present disclosure.

The communication control program 151 may include a normal operation routine for supporting a normal communication mode and a low power operation routine for supporting a low power communication mode. The normal operation routine may include sub-routines of activating the first Wi-Fi module 180, searching for at least one target device 200 by means of the first Wi-Fi module 180, and establishing a communication channel, in response to the selection of a menu item, an icon, or a button designated for executing the corresponding function.

The low power operation routine may include sub-routines of receiving a request for establishing a connection with the target device, activating the first BT module 170, searching for at least one target device 200 using the first BT module 170, and outputting a device list including the found target devices. The low power operation routine may include sub-routines of receiving an input for selecting a target device from the device list, activating the first Wi-Fi module 180, establishing a communication channel with the selected target device using the first Wi-Fi module 180, and providing the application data of a specific application to the target device through the communication channel. Here, the application data may include at least one of above-described video and audio data. The application data may include file data, broadcast data, voice communication data, and video communication data.

The first BT module 170 may be a component as an example communication module supporting the first communication scheme of the source device 100. In an embodiment, the first BT module 170 may operate at relatively low power level as compared to the first Wi-Fi module. The first BT module 170 may be a communication module supporting low volume low data rate transmission as compared to the first Wi-Fi module 180. Accordingly, the first BT module 170 may be replaced with another communication module operating at a power level lower than that of the first Wi-Fi module 180. The first BT module 170 may establish a preliminary channel for preparing communication channel establishment based on the first Wi-Fi module 180. The first BT module 170 may not transmit or receive qualification information in the procedure of searching for the target device 200. That is, the first BT module 170 may just broadcast an Inquiry requesting the target device 200 for the identity information and acquire the identity information from the response signal received in reply to the inquiry. If necessary, the designer may design the source device to identify the target device preliminarily by transmitting/receiving qualification information in the procedure of searching for the target device 200 using the first BT module 170. In this embodiment, the qualification information may include the qualification key generated based on the address information of the devices using the qualification key algorithm stored in at least one of the source and target devices 100 and 200.

The first Wi-Fi module 180 may be a communication module operating at a relatively high power level as compared to the first BT module 170. The first Wi-Fi module 180 may include one of the high volume and high speed transmission properties as compared to the first BT module 170. The first Wi-Fi module 180 may be replaced by another communication module including the aforementioned properties. The first Wi-Fi module 180 may establish a communication channel with the target device 200 for use in the Wi-Fi direct mode. The first Wi-Fi module 180 may transmit the application data of the application running on the source device 100 to the target device 200.

The first control unit 160 may process various signals related to the operation of the source device 100 and transmit data. The first control unit 160 may control the communication channel establishment between the source and target devices 100 and 200. If a communication channel is established with the target device 200, the first control unit 160 may control to transmit the application data of the currently running application to the target device 200. For this purpose, the first control unit 160 may include the components as shown in FIG. 3.

FIG. 3 is a block diagram illustrating a configuration of the first control unit 160 of FIG. 2.

As shown in FIG. 3, the first control unit 160 includes a BT manager 161, a Wi-Fi manager 163, and a content manager 165.

The BT manager 161 may control the operation of the first BT module 170. For example, if an input for activating the low power Wi-Fi direct mode is detected, the BT manager 161 controls to supply power to the first BT module 170. The BT manager 161 may scan around using the first BT module 170. As described above, the BT manager 161 may broadcast an inquiry requesting the Bluetooth-enabled target device 200 for identity information. The BT manager 161 may generate a device list based on the information of at least one found target device. The BT manager 161 may control the first display unit 140 to display the device list. In the embodiment, the BT manager 161 may generate the device list based on the MAC addresses of the target devices 200. The BT manager 161 also may generates the device list based on the names provided by the target devices 200. If there is any device which has been found previously, the BT manager 161 may differentiate the corresponding target device item from other items. For example, if the corresponding target device 200 has the identity information designated by the user, it may use the identity information to generate the device list. The BT manager 161 may place the identity information of the device that has been founded previously at the top of the device list prior to those of other devices. If a certain device is selected form the device list, the BT manager 161 may provide the Wi-Fi manager 163 with the identity information of the selected target device 200. Here, the identity information of the target device 200 may be the MAC address of the target device 200. The identity information also may be the qualification information of the target device 200.

If the information related to a certain target device 100 is received from the BT manager 161, the Wi-Fi manager 163, the Wi-Fi manager 163 activates the first Wi-Fi module 180. The Wi-Fi manager 163 may control the first Wi-Fi module to establish a Wi-Fi communication channel using the information on the target device 200. The Wi-Fi manager 163 controls the first BT module 170 to release the Bluetooth communication channel while the first Wi-Fi module establishes the Wi-Fi communication channel. The communication channel established by the first Wi-Fi module 180 may be a Wi-Fi direct mode communication channel. The Wi-Fi manager 163 may send the target device 200 the application data provided by the content manager 165. If an event for releasing the communication channel occurs, the Wi-Fi manager 163 may release the Wi-Fi direct communication channel. The Wi-Fi manager 163 may provide the target device 200 with the information notifying of the communication channel release. The Wi-Fi manager 163 may deactivate the first Wi-Fi module 180.

The content manager 165 may control the operation of the applications running on the source device 100. The content manager 165 may control to execute the application selected based on the signal input through the input unit 120 or the input function-enabled first display unit 140 or according to predetermined schedule information. The content manager 165 may provide the Wi-Fi manager 163 with the application data generated by the executed application. In the state that the application execution request is received, if the corresponding application supports the Wi-Fi direct mode, the content manager 165 may control to present a virtual key button for selecting the Wi-Fi direct mode. The content manager 165 may control the present a menu item or icon for selecting the Wi-Fi direct mode. If an input requesting for activation of the Wi-Fi direct mode is detected, the BT manager 161 and the Wi-Fi manager 163 may establish a Wi-Fi communication channel with the target device 200. Then the content manager 165 may control to display a list of the menu items or icons related to the operation of the target device 200 on the screen. If a certain item is selected, the content manager 165 may control to execute the application corresponding to the selected item and transmit the application data to the target device 200 as default.

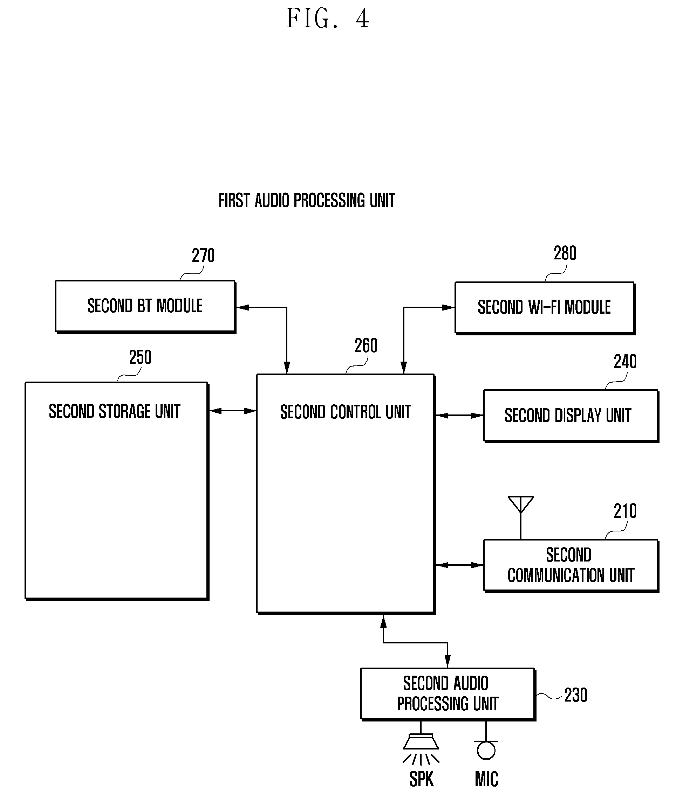

FIG. 4 is a block diagram illustrating a configuration of the target device 200 of FIG. 1.

As shown in FIG. 4, the target device 200 includes a second communication unit 210, a second audio processing unit 230, a second display unit 240, a second storage unit 250, a second control unit 260, a second BT module 270, and a second Wi-Fi module 280.

In the above structured target device 100, the second BT module 270 may stay in a scan standby state. If the second BT module 270 receives a discovery inquiry, the target device 200 may provide the source device which has transmitted the inquiry with the identity information. If a Wi-Fi communication channel establishment request is received from the source device 100, the target device 200 may activate the second Wi-Fi module 280. The target device 200 may communicate data with the source device 100 through the communication channel established by the second Wi-Fi module 280. That is, the target device 200 controls the second BT module to prepare connection establishment and the second Wi-Fi module to establish the communication channel.

The second communication unit 210 is responsible for the communication function of the target device 200. In an embodiment, the second communication unit 210 may establish a communication channel with the home sync network device like the first communication unit 110 of the source device 100. The second communication unit 210 may receive the qualification informations of other devices, e.g. other target devices and source device, and unique identity informations of the corresponding devices. The received information may be sued for establishing Wi-Fi communication channels with other devices. The second communication unit 210 may be an Internet Protocol module for establishing a communication channel with the home sync network device. The second communication unit 210 may be a mobile communication (cellular) module.

The second audio processing unit 230 is responsible for processing audio data in the target device 200. The second audio processing unit 230 may include at least one speaker. The second audio processing unit may output the audio data transmitted by the source device 100. The second audio processing unit 230 also may output an announcement sound notifying of the turn-on state of the second BT module 270. If the second BT module 270 receives the discovery inquiry and provides the identity information in response to the inquiry, the second audio processing unit 230 may output the announcement sound corresponding to the identity information under the control of the second control unit 260. If the second Wi-Fi module 280 establishes a Wi-Fi direct communication channel, the second audio processing unit 230 may output an announcement sound or sound effect notifying of the Wi-Fi direction communication channel establishment. The audio data output function may be omitted according to the designer's intension or configuration of the target device 200.

The second display unit 240 may display various screen interfaces associated with the operations of the target device 200. The second display unit 240 may output a screen showing the progress of Bluetooth communication channel establishment or Wi-Fi communication channel establishment with the source device 100. The second display unit 240 may display the screen presenting the video data among the application data provided by the source device 100. The screen output by the second display unit 240 may be the screen presenting at least one execution window of the application running on the source device 100 currently.

The second storage unit 250 may store various informations associated with the operation of the target device 200. For example, the second storage unit 250 may store the program for operating the second BT module 270. The second storage unit 250 may store the program for operating the second Wi-Fi module 280. The second storage unit 250 may store the identity information of the target device 200. The storage unit 250 also may store the identity information on the source device 100 or other target devices registered with the same account of the home sync network device. The second storage unit 250 may store the application data provided by the source device 100 temporarily or semi-persistently.

The second BT module 270 is an example communication module operating at low power level as compared to the second Wi-Fi module 280. The second BT module 270 may be the communication module supporting low volume or low speed data transmission as compared to the second Wi-Fi module 280. The second BT module 270 may establishes a communication channel with the first BT module 170 of the source device 100.

The second Wi-Fi module 280 may be an example communication module operating at high power level as compared to the second BT module 270. The second Wi-Fi module 280 may be the communication module supporting high volume high speed data transmission as compared to the second BT module. The second Wi-Fi module 280 may establish a communication channel with the first Wi-Fi module 180. For example, the second Wi-Fi module 280 may establish a Wi-Fi direct mode-based communication channel with the first Wi-Fi module 180. The second Wi-Fi module 280 may receive the application data transmitted by the source device 100. The received application data may be provided to the second control unit 260. Although the description has been directed to the embodiment where the source device 100 provides the target device 200 with application data, the present disclosure is not limited thereto. For example, data generated by the target device 200 may be transferred to the source device 100 through the Wi-Fi communication channel established by means of the second Wi-Fi module. The second Wi-Fi module 280 may send the source device 100 the application data of the application running on the target device 200 or the input signal generated at the target device 200.

The second control unit 260 may generate signal necessary for the operation of the target device 200 and process data. For example, once the target device 200 boots up in response to the turn-on signal input, the second control unit 260 activates the second TB module 270 to be in the scan standby state. The second control unit 260 may receive the communication connection request from the source device 100 by means of the second BT module 270. Accordingly, the second control unit 260 controls the low power communication module to prepare connection and the communication module operating in relatively good communication condition to establish a communication channel.

The second control unit 260 may control the second BT module 270 to stay in the turn-off state while the Wi-Fi communication channel is established. If the Wi-Fi communication channel is released, the second control unit 260 controls the second BT module 270 to be in the turn-on state. The second control unit 260 also may control the second BT module 270 to state in the turn-on state independently of the establishment of the Wi-Fi communication channel to provide the devices requesting for Bluetooth connection with the identity information and establish a Bluetooth communication channel.

As described above, the communication control system and components constituting the system are capable of preparing connection for data communication between the source and target devices 100 and 200 using the Bluetooth module as the first communication module and establishing the channel for data communication using the Wi-Fi module. In an embodiment, the above described technology is useful in the situation where the target device 200 has no input means such that the Wi-Fi module cannot be activated at the time when the connection is used. The communication control system of the present disclosure is implemented in such a way that a low power communication module prepares communication connection preliminarily and a high volume and high speed communication module establishes the communication channel. In this way, the communication control system of the present disclosure is capable of establishing the communication channel using a communication module of which communication environment is relatively good at the data transmission timing while minimizing power consumption.

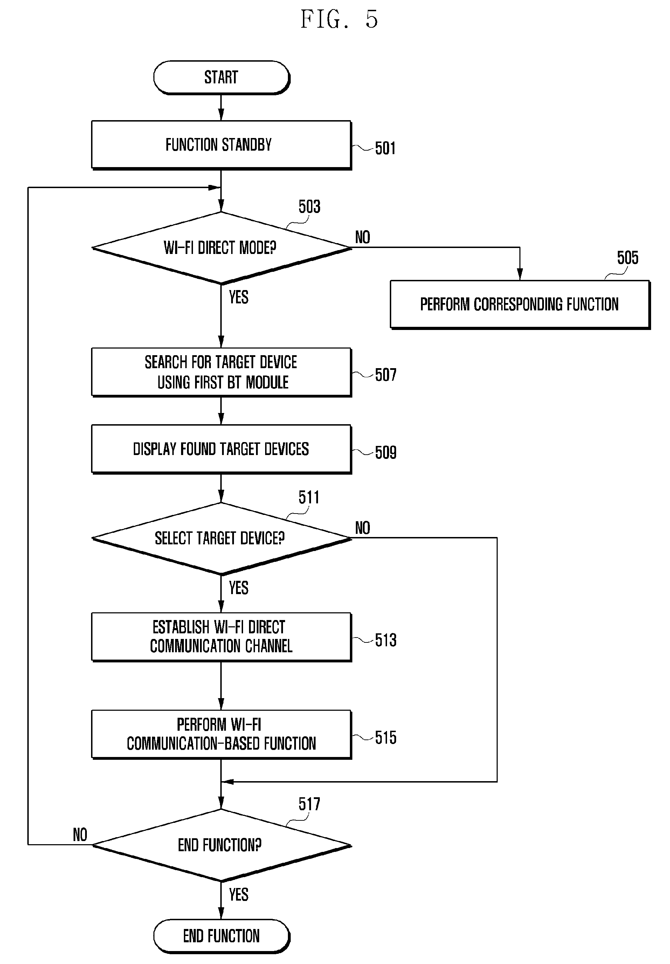

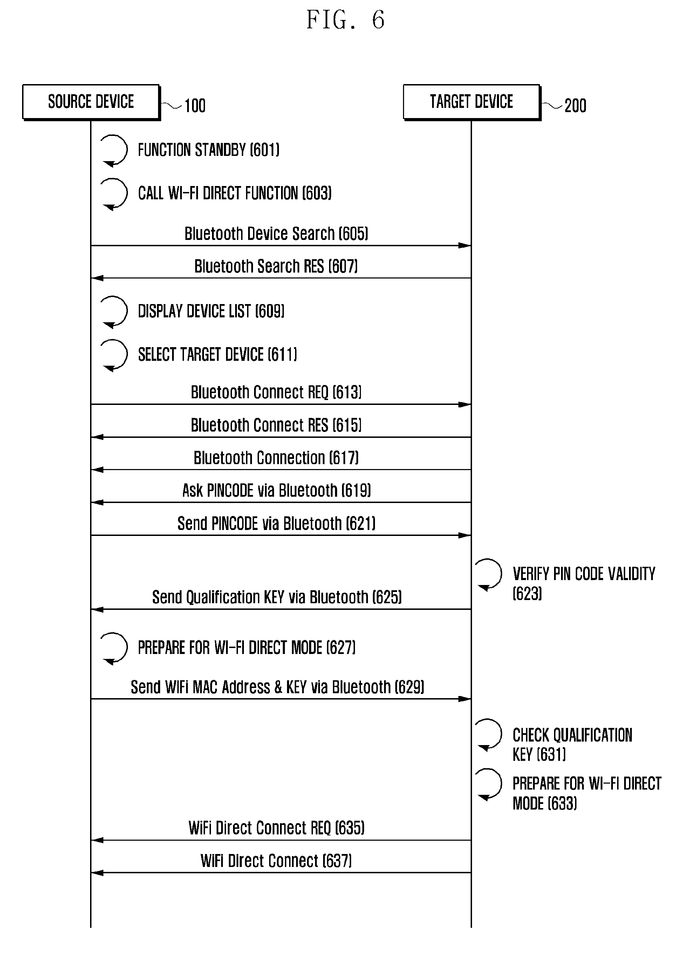

The communication control method of the present disclosure may include establishing a communication channel by means of the first communication module, transmitting/receiving data for establishing communication channel of the second communication module, and establishing the communication channel by means of the second communication module. From the view point of the source device 100, the communication control method of the present disclosure is embodied in such a way that the source device establishes a communication channel by means of the first communication module, transmits/receives data for use in establishing a communication channel using the second communication module, and establishes the communication channel by means of the second communication module. From the view point of the target device, the communication control method of the present disclosure is embodied in such a way that the target device 200 establishes a communication channel by means of the first communication module upon receipt of a connection request by means of the first communication module, transmits/receives information necessary for establishing a communication channel using the second communication module, and establishes, when the source device 100 is available, the communication channel with the with the source device 100 by means of the second communication module. The operation procedure of the source device in the communication method of the present disclosure is described with reference to FIG. 5. The operation procedure of the target device in the communication method of the present disclosure is described with reference to FIGs. 6, 7, and 9.

FIG. 5 is a flowchart illustrating the operation procedure of the source device in the communication control method according to an embodiment of the present disclosure.

In the operation procedure of the source device, the first control unit 160 controls such that the source device in a function standby state at operation 501. In the function standby state, the first control unit 160 controls the first display unit 140 to display a standby screen or an icon screen according to an input signal or preconfigured schedule information. The first control unit 160 executes an application in response to the input signal and controls such that the video data of the application is output in the form of a screen and the audio data of the application is output in the form of audible sound wave.

If an input signal is detected, the control unit determines whether the input signal is a Wi-Fi direct mode activation request signal at operation 503. If the input signal is the Wi-Fi direct mode activation request, the procedure goes to operation 505 to perform the corresponding function of the source device 100. For example, the first control unit 160 may control to perform one of broadcast reception function, file playback function, file edit function, memo function, telephony function, messaging function, and picture collection function.

If the input signal is the Wi-Fi direction mode activation signal at operation 503, the first control unit 160 may search around for a target device by means of the first BT module 170. In this process, the first control unit 160 supplies power to the first BT module 170 and generates an inquiry requesting for the identity information of at least one target device 200 by means of the first BT module 170.

Next, the first control unit 160 controls the first display unit 140 to display the found target devices 200 at operation 509. In this embodiment, the first control unit 160 may control to display the at least one found target device in the form of a list of the identifiers of the corresponding target devices. In the process of generating a device list including the identifiers of the target devices, any qualification information verification process between the source and target devices 100 and 200 may be omitted. That is, the device list generation process may be the process of just collecting and outputting the identity information.

Next, the first control unit 160 of the source device 100 determines whether an input for selecting a target device 200 is detected at operation 511. The user may select at least one of the target devices for establishing a communication channel from the device list displayed by the first display unit 140. For example, the user may establish communication channels with a plurality of target devices. The user also may establish a communication channel with one target device.

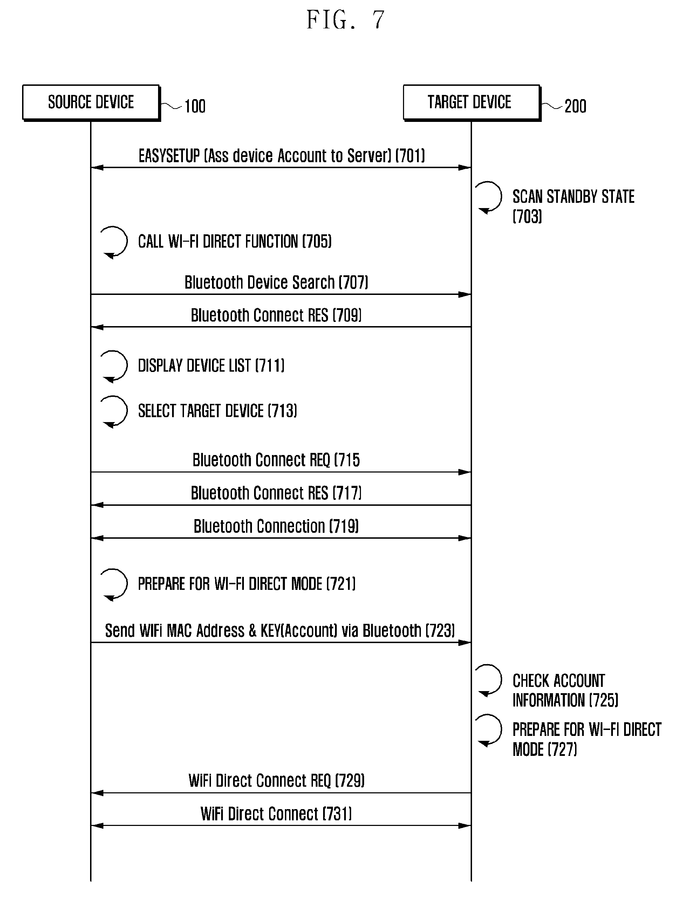

If an input signal for selecting a certain target device 200 at operation 511, the first control unit 160 may establish a Wi-Fi direct communication channel at operation 513. In this process, the first control unit 160 may perform the qualification process for establishing the Wi-Fi communication channel. The qualification process may be described in more detail with reference FIGs. 6 and 7.

The first control unit 160 controls to perform Wi-Fi communication-based functions at operation 515. For example, the first control unit 160 may control the first Wi-Fi module 180 to transmit the application data of the application running on the source device 100 to the target device.

Next, the first control unit 160 determines whether an input signal for terminating the function is detected at operation 517. If no input signal for terminating the function is detected, the first control unit 160 returns the procedure to operation 503 to perform the subsequent operations again. The first control unit 160 also may return the procedure to operation 515 to continue Wi-Fi communication-based operation. The first control unit 160 also may returns the procedure to operation 509 to display the devices list of the found target devices in order for the user to select another target device.

Although the description is directed to the embodiment where the user selects a target device from a device list to establish a Wi-Fi communication channel with the selected target device, the present disclosure is not limited thereto. For example, the user may configure one of the target devices as a default target device to establish a Wi-Fi communication channel. Then the first control unit 160 of the source device 100 establishes a communication channel by means of the first BT module 170 in the target device search procedure and, if there is any device including Wi-Fi-based connection history, controls the first Wi-Fi module 180 to establish a communication channel as default. In this embodiment, if the corresponding target device 200 and the source device 100 are registered with the same account of the home sync network device, the first control unit 160 may control to establish the Wi-Fi connection without extra qualification information entry process. The first control unit 160 also may controls to display an input window for receiving qualification information input without target device selection process. In the embodiment that a plurality target devices attempt establishing communication channels based on the first Wi-Fi module 180 via the preliminary operation of the first BT module, the first control unit 160 may select one of the target devices. The first control unit 160 also may control the establish Wi-Fi communication channels with the plural target devices as default. Then the first control unit 160 may control to transmit the application data generated by the application running on the source device 100 to the plural target devices simultaneously.

FIG. 6 is a signal flow diagram illustrating signal flows between devices in the communication control method according to an embodiment of the present disclosure.

Referring to FIG. 6, the source device 100 may receive an input signal for executing the Wi-Fi direction function in the function standby state at operation 601. In this embodiment, at least one target device 200 may be in the BT communication standby state.

If the input signal for executing the Wi-Fi direction function is detected, the source device 100 may scan around by means of the first BT module 170 at operation 603. For this purpose, the source device 100 supplies power and initializes the first BT module 170. The source device 100 broadcasts a scan signal (Bluetooth Device Search) at operation 605. If the scan signal is received, the target device 200 sends the source device 100 a response signal (Bluetooth Search RES) at operation 607.

If the response signal (Bluetooth Search RES) is received, the source device 100 generates a device list based on the received response signal (Bluetooth Search RES) and displays the device list at operation 609. The source device 100 receives an input signal for selecting a certain target device from the device list at operation 611. Then the source device 100 sends the selected target device 200 a Bluetooth Connect Request signal (Bluetooth Connect REQ) at operation 613. If the Bluetooth Connect REQ is received, the target device 200 sends the source device a Bluetooth Connect Response signal (Bluetooth Connect RES) at operation 615. Then the source and target devices 100 and 200 establish a Bluetooth communication standby channel (Bluetooth Connection) at operation 617.

Once the Bluetooth connection has been established, the target device sends the source device 100 a predefined PIN code information request (Ask PINCODE via Bluetooth) through the corresponding communication channel at operation 619. Then the source device 100 sends the target device 200 a PIN code information response (Send PINCODE via Bluetooth) at operation 621. For this purpose, the source device 100 displays an input window for entry of PIN code and receives the PIN code input through the input unit 120 or the input function-enabled first display unit 140. The source device 100 may sends the target device 200 the PIN code information stored in the storage unit 150 previously. Here, the PIN code information is the information for the target device 200 to check the access of authorized user. The PIN code information may be printed at an area of the surface of the target device 200. The PIN code information may be memorized by the user using the target device 200. The PIN code information may be stored in the first storage 150 previously according to the access history to the target device 200. In the embodiment that the PIN is stored in the first storage unit 150 previously, the source device 100 checks the connection history to acquire the PIN code of the selected target device 200 automatically and sends the PIN code to the target device 200. The source device 100 may store and manage the connection history to provide the PIN code information automatically.

If the PIN code information is received from the source device 100, the target device 200 determines whether the corresponding information is valid at operation 623. For this purpose, the second control unit 260 of the target device 200 stores its PIN code in the second storage unit 250 and compares the PIN code transmitted by the source device 100 with its PIN code. IF the PIN code is invalid, the target device 200 sends the source device 100 an announcement message notifying of the information mismatch or invalidity and terminates the procedure. The target device 200 may return the procedure to operation 601. If the informations mismatch, the target device may request for the PIN code information a predetermined number of times. If the informations match, the target device 200 sends the source device 100 a qualification key through the Bluetooth communication channel at operation 625.

If the qualification key is received form the target device 200, the source device 100 prepares for the Wi-Fi direction mode at operation 627. In this embodiment, the source device 100 may activate the first Wi-Fi module 180. The source device 100 sends the target device 200 the Wi-Fi MAC address and received qualification key through the Bluetooth communication channel at operation 629.

The target device 200 checks the source device 100 by verifying the received qualification key at operation 631. That is, the target device 200 checks whether the key transmitted by the source device 100 matches the qualification key provided to the source device 100 at operation 625. If the qualification keys match, the target device 200 prepare for the Wi-Fi direct mode at operation 633 and sends the source device 100 a Wi-Fi Direct Connection Request (WIFI Direct Connect REQ) at operation 635. In this embodiment, the target device 200 may request the source device 100 for connection establishment based on the received Wi-Fi MAC address. Afterward, the source and target device 100 and 200 establish a communication channel for Wi-Fi direct connection (WIFI Direct Connect) at operation 637.

The above-described PINCODE exchange procedure may be replaced with a procedure of exchanging the qualification key generated based on the unique identity information of the counterpart device using the qualification key algorithm supported by the source and target devices 100 and 200.

Qualification Key=EncryptData(ClientbluetoothAddress,ServerBluetoothA dress)

Here, Qualification_Key is an encrypted value, ClientbluetoothAddress is a Key value as Bluetooth address information of the source device 100 or the target device 200, and ServerBluetoothAdress is a data (DATA) value as Bluetooth address of the target eevice 200 or the source device 100. The ServerBluetoothAdress as the data value may be acquired through a decryption process as follows.

ServerBluetoothAdress=DecryptData(ClientbluetoothAddress,Qualification Key)

The source and target devices 100 and 200 may qualify the counterpart device by transmitting/receiving the value encrypted through the qualification algorithm as the authentication information as described above.

In an alternative embodiment of the present disclosure, the device qualification process corresponding to operations 619 to 633 may be replaced with following process.

In detail, the source and target devices 100 and 200 may store the aforementioned compatible qualification algorithms previously. The source device 100 may generate a Wi-Fi direct connection request to the target device 200 so as to establish a Bluetooth communication channel with the target device 200.

Afterward, the source device 100 may perform a process of generating the qualification key using the unique identity information of the target device 200 which has been acquired in the Bluetooth communication channel establishment process and the qualification algorithm. The source device 100 may send the target device 200 the generated qualification key along with the Wi-Fi MAC address. Here, the source device 100 may prepare for the Wi-Fi direct mode at the same when transmitting the Wi-Fi MAC address.

If the qualification key and Wi-Fi MAC address is received from the source device 100, the target device 200 performs authentication verification. In this embodiment, the target device 200 decrypts the qualification key using the previously stored qualification algorithm and checks whether the decrypted information matches its unique identity information. If the decrypted information matches its unique identity information, the target device 200 sends a Wi-Fi direct connection request based on the Wi-Fi MAC address information received from the source device 100. Then the source device 100 which has prepared for Wi-Fi direct mode already establishes the Wi-Fi direction connection with the target device 100.

In the process of generating the qualification key based on the unique identity information of the source device 100, the source device 100 may generates the qualification key using the Bluetooth address, Bluetooth device serial, and device name of the target device 200 which have been collected in the Bluetooth communication channel establishment procedure. As described above, the source device 100 may use specific information input by the user or image information captured by means of an image capture device as the unique identity information for generating the qualification key.

Although the above description has been directed to the embodiment where the source device 100 generates the qualification key to the target device 200, the present disclosure is not limited thereto. For example, the target device 200 may establish a Bluetooth communication channel with the source device 100, generate a qualification key using the unique identity information of the source device 100, and exchange signals for establishing Wi-Fi direction connection.

FIG. 7 is a signal flow diagram illustrating signal flows between devices in the communication control method according to another embodiment of the present disclosure.

Referring to FIG. 7, the source and target devices 100 and 200 may perform EASYSETUP process at operation 701. Through the EASYSETUP state, the source and target devices 100 and 200 share information via the home sync network device. For this purpose, the source and target devices 100 and 200 establish a communication channel by means of the first and second communication units 110 and 210 respectively to share qualification information therebetween. That is, the source and target devices 100 and 200 may recognize in advance that they have been registered with the same account of the home sync network device.

The target device 200 enters the scan standby state with the second BT module 270 at operation 703. The source device 100 receives an input signal for executing the Wi-Fi direct function at operation 705. Then the source device 100 outputs a scan signal (Bluetooth Device Search) for discovering Bluetooth devices at operation 707. If the scan signal (Bluetooth Device Search) is received, the target device 200 sends the source device 100 a response signal (Bluetooth Search RES) in replay at operation 709.

The source device may generate a device list based on the response signals (Bluetooth Search RES) received from other devices at operation 711. The source device 100 receives an input signal for selecting one of the target devices from the device list under the control of the user at operation 713. Then the source device 100 may send the target device 200 a Bluetooth connection request signal (Bluetooth Connect REQ) at operation 715. The target device 200 sends the source device 100 a Bluetooth connection response signal (Bluetooth Connect RES) in response to the Bluetooth Connect REQ at operation 717. The source and target devices 100 and 200 establish a Bluetooth communication standby channel (Bluetooth Connection) at operation 719.

If the Bluetooth communication standby channel (Bluetooth Connection) is established, the source device prepares for the Wi-Fi direct mode at operation 721. If the Wi-Fi direct mode preparation has completed, the source device 100 sends the target device 200 the Wi-Fi MAC address and the key/qualification information shared via the home synch network device at operation 723.

The target device 725 determines whether the received key/qualification information match the information share via the home sync network device at operation 725. If the informations match, the target device 200 prepares for the Wi-Fi direct mode at operation 727. Afterward, the target device 200 sends the source device 200 a Wi-Fi direct connection request (WIFI Direct Connect REQ) at operation 729. As a consequence, the source and target devices 100 and 200 establish the Wi-Fi direct communication channel (WIFI Direct Connect).

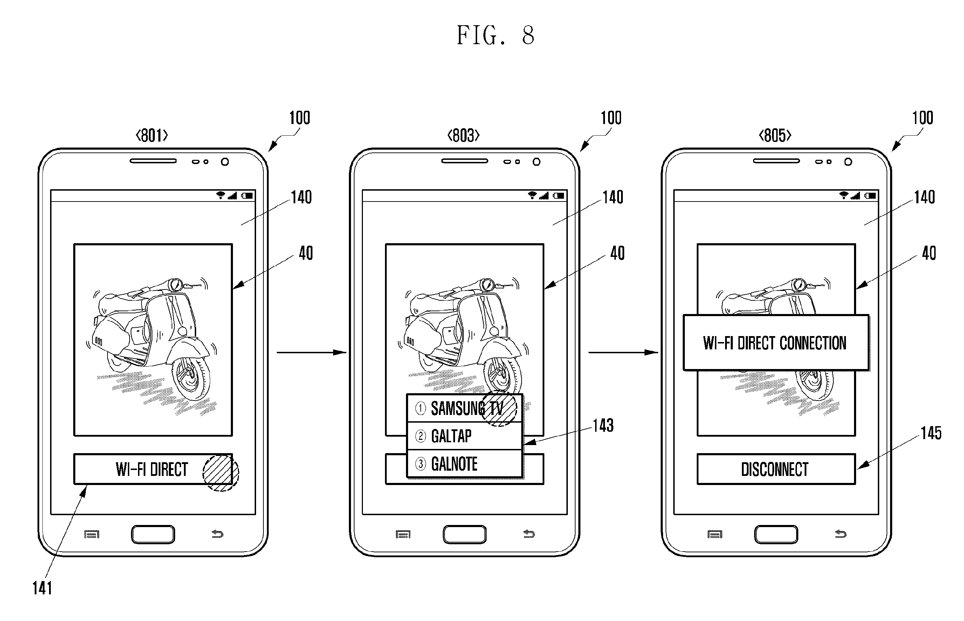

FIG. 8 is a diagram illustrating example screen displays of the source device for explaining the communication control method according to an embodiment of the present disclosure.

Referring to FIG. 8, the first display unit 140 of the source device 100 may display an application execution window 40 for presenting application data of a certain application as shown in the example screen display 801. The application execution window 40 may be a motion picture area for playing a video file. The application execution window 40 also may be an area for presenting still pictures or pictures slide. The application execution window 40 also may be an area for presenting broadcast playback image corresponding to the broadcast signals received by the broadcast reception module. The source device 100 may control the first audio processing unit 130 to process the audio data of the corresponding application while displaying the video data in the application execution window 40.

In the embodiment that the corresponding application supports the Wi-Fi direct mode, the first display unit 140 may display the Wi-Fi activation item 141. The first display unit 140 also may display a menu item for activating the Wi-Fi direct mode independently of the currently running application.

If the Wi-Fi activation item 141 is selected, the source device 100 broadcasts a scan signal by means of the first BT module 170 and outputs the device list 143 generated based on the information acquired from the signals received in response to the scan signal as shown in the example screen display 803. Although the device list 143 is depicted in the form of listing the names of the devices responded to the scan signal, the present disclosure is not limited thereto. For example, the device list may be generated in the form of listing the Bluetooth MAC addresses of the devices responded to the scan signal. Although the device list 143 is depicted in the form of being overlaid on the Wi-Fi activation item 141 in the drawing, the device list 143 may be displayed at other area.

If a target device item, e.g. "Samsung TV" item, is selected from the device list 143, the source device 100 may establish a Wi-Fi communication channel with the target device 200 corresponding to the "Samsung TV" item. In the process, the information necessary for establishing the Wi-Fi communication channel is exchanged through the Bluetooth communication established in advance. Here, the source device 100 may receive a PIN code input request from the target device and control the first display unit 140 to display a PIN code input window. The user may enter a PIN code using the input unit 120 or a virtual keypad displayed by the first display unit 140.

If a Wi-Fi communication channel is established with the selected target device 200, the source device 100 may control to display the announce message notifying of the Wi-Fi direct connection as shown in the example screen display 805. The source device 100 also may display a Wi-Fi direct connection release item 145. If the Wi-Fi direct connection release item 145 is selected, the source device 100 performs the process of releasing the Wi-Fi direct connection with the target device 200. In the state that the Wi-Fi direction connection is established, the source device 100 may transmit to the target device 200 the video data presented in the application execution window 40 and/or audio data of the corresponding application through the Wi-Fi direct communication channel.

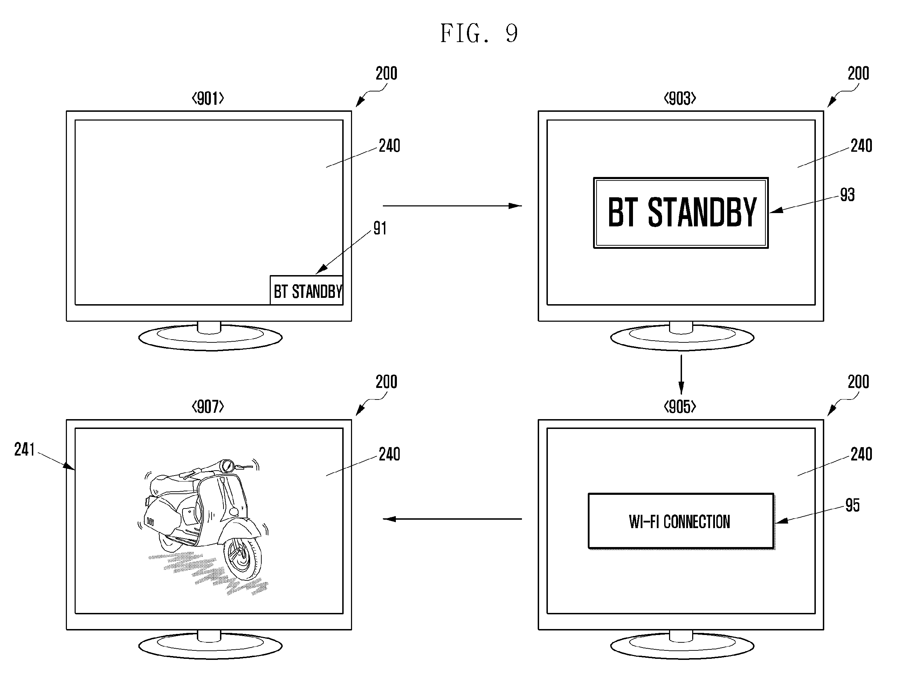

FIG. 9 is a diagram illustrating example screen displays of the target device for explaining the communication control method according to an embodiment of the present disclosure.

Referring to FIG. 9, if the second display unit 240 powers on, the target device 200 is initialized. The second display unit 240 may display Bluetooth standby state notification information 91 as shown in the example screen display 901. The standby state notification information 91 may be presented sporadically or continuously. The second display unit 240 may display video data being played by the target device 200. In the embodiment that the target device is a PC monitor, the video data being played by the PC may be display on the screen of the second display unit 240.

If a scan signal is received from the source device 100, the target device 200 sends the source device 100 a response signal in response to the scan signal. If a Bluetooth communication channel establishment request is received from the source device 100, the target device 200 establishes a Bluetooth communication channel with the source device. The source device 100 may display the Bluetooth connection information 93 as shown in the example screen display 903 when the Bluetooth connection has been established. In this embodiment, the Bluetooth connection information 93 may be displayed along with the information on the source device 100. The target device may receive and display at least one of Bluetooth MAC address and name of the source device 100.

If a Wi-Fi MAC address is received from the source device 100, the target device 200 regards the receipt of the Wi-Fi mace address as Wi-Fi connection request and verifies the validity of the source device 100. In the process, the target device 200 may request for PIN code or qualification information and compares the received information with the predefined information. If the source device 100 is a valid device, the target device 200 may establish a Wi-Fi communication channel with the source device 100. In this embodiment, the second display unit 240 of the source device 100 may display the Wi-Fi connection information 95 indicating the Wi-Fi connection state as shown in the example screen display 905. The Wi-Fi connection information 95 may be displayed temporarily. The Wi-Fi connection information 95 may not be displayed.

If the video data of a certain application is received from the source device 100, the target device 200 configures the screen with the received video data. The second display unit 240 of the target device 200 may display an application execution area 241 as shown in the example screen display 907. The application execution area 241 may display the screen presenting the data identical with that presented in the application execution window 40 of the source device. The application execution area 241 may be an execution window of one of the applications running on the source device. As described above, the source and target devices 100 and 200 may establish a Wi-Fi direct communication channel using at least one of the qualification algorithm for generating a qualification key based on the unique identity information of the counterpart device and the previously stored authentication information and the Bluetooth communication channel.

According to an embodiment of the present disclosure, at least one of the source and target devices 100 and 200 may be any of mobile communication terminals operating with communication protocols corresponding to various communication systems, Portable Multimedia Player (PMP), Personal Digital Assistant (PDA), music player (e.g. MP3 player), portable game console, smartphone, laptop computer, handheld PC, and their equivalents.

The communication control method and electronic device implementing the same according to the present disclosure is capable of improving communication performance.

Although the present disclosure has been described with an example embodiment, various changes and modifications may be suggested to one skilled in the art. It is intended that the present disclosure encompass such changes and modifications as fall within the scope of the appended claims.

## Claims

1. A communication control method comprising:
establishing, at a source device, a preliminary channel via a first communication module;
communicating data for establishing a communication channel through the preliminary channel, the communication channel being established via a second communication module; and
establishing the communication channel via the second communication module.

2. The method of claim 1, wherein the establishing of the preliminary channel comprises:
broadcasting, at the source device, a scan signal via the first communication module, the first communication module being a Bluetooth module;
receiving at least one response signal in reply to the scan signal;
generating a device list including at least one target device transmitted the response signal;
displaying the device list; and
establishing, when a target device is selected from the device list, the preliminary channel, the preliminary channel being a Bluetooth channel.

3. The method of claim 2, wherein the establishing of the preliminary channel comprises:
receiving, at the source device, a qualification verification signal for establishing th e Bluetooth channel;
collecting qualification information; and
transmitting the collected qualification information to the target device.

4. The method of claim 3, wherein the transmitting of the collected qualification information comprises:
generating, at the source device, a qualification key using a unique identity information of the target device and a previously stored qualification key algorithm;
transmitting the qualification key and a Wi-Fi identity information to the target device;
decrypting, at the target device, the qualification key using the qualification key alg orithm;
transmitting, at the target device, a Wi-Fi direct connection request message when t he decrypted unique identity information is valid;
preparing, at the source device, Wi-Fi direct mode by activating a Wi-Fi module after transmitting the qualification key.

5. The method of claim 3, further comprising preparing, at the source device, for a Wi-Fi direct mode by activating a Wi-Fi module,
wherein the transmitting of the collected qualification information comprises transmitting qualification information shared previously through the Bluetooth channel and Wi-Fi identity information to the target device.

6. The method of claim 1, wherein the establishing of the communication channel comprises establishing a Wi-Fi direct connection via a Wi-Fi module.

7. The method of claim 6, further comprising transmitting, at the source device, app lication data of an application running on the source device to the target device through the Wi-Fi direct connection.

8. A source device comprising:
a first communication module configured to broadcast a scan signal for supporting Wi-Fi direct mode and establish a preliminary channel for preparing for establishment of a communication channel;
a second communication module configured to establish the communication channel; and
a first control unit configured to control broadcasting the scan signal, generating a device list including at least one target device item based on response signal received in reply to the scan signal, displaying the device list, establishing the preliminary channel with a target device corresponding to an target device item selected from the device list via the first communication module, and establishing the communication channel with the target device via the second communication module.

9. The source device of claim 8, wherein the first communication module supports at least one of low power, low volume, low speed data transmissions as compared to the second communication module, and the second communication module supports at least one of high power, high volume, and high speed data transmissions as compared to the first communication module, and
wherein the first communication module is a Bluetooth module and the second com munication module is a Wi-Fi module.

10. The source device of claim 8, further comprising at least one of an image capture device configured to capture unique identity information printed on the target device and an input unit configured to receive input of the unique identity information of the target device; and.
a storage unit configured to store a qualification key algorithm for generating a qualification key based on at least one of an address of the first communication module, a name of the first communication module, the unique identity information acquired via the image capture device, and the unique identity information input via the input unit.

11. The source device of claim 8, further comprising a first communication unit configured to establish a communication channel with a home sync network device for sharing qualification information with the target device.

12. The source device of claim 8, further comprising a first display unit configured to display the device list.

13. The source device of claim 8, further comprising a first display unit configured to display an application execution window of an application,
wherein the first control unit is configured to control to transmit video data of the a pplication execution window displayed on the first display unit to the target device through the communication channel established by the second communication module.

14. A target device comprising:
a Bluetooth module configured to transmit a response signal in reply to a scan signal to establish a preliminary channel for preparing establishment of a communication channel;
a Wi-Fi module configured to establish the communication channel; and
a second control unit configured to control establishment of the preliminary channel via the Bluetooth module upon receipt of a Bluetooth connection request from a source device which has broadcast the scan signal and the communication channel with the source device via the Wi-Fi module.

15. The target device of claim 14, further comprising a storage unit configured to store at least one of qualification information shared for identifying the source device in establishing the preliminary channel via the Bluetooth module and the qualification key algorithm for verifying unique identity information acquired by decrypting the qualification key transmitted by the source device,
wherein the second control unit is configured to request the source device for identi ty information and compare the received identity information with previously stored identit y information in establishing the preliminary channel via the Bluetooth module.
